# EUROPEAN PATENT APPLICATION

(11) **EP 4 706 809 A1**
(43) Date of publication of application: **11.03.2026**
(21) Application number: 24918991.1
(22) Date of filing: 20.12.2024
(51) Int. Cl.: B01J 8/18

(54) **ELECTRICALLY HEATED REACTOR**

(30) Priority: 15.01.2024 KR 20240006272
(71) Applicant: LG Chem, Ltd., Seoul 07336 (KR)
(72) Inventor: PARK, Hongseok, Daejeon 34122 (KR); KWON, Hyun Jee, Daejeon 34122 (KR); KANG, Mooseong, Daejeon 34122 (KR); CHOI, Jaehoon, Daejeon 34122 (KR)
(74) Representative: Hoffmann Eitle
(86) International application number: PCT/KR2024/020830
(87) International publication number: WO 2025/154967

(57) **Abstract**

Disclosed is an electrically heated fluidized bed reactor. The electrically heated fluidized bed reactor includes a heating plate disposed on one side of the reactor housing, and a heat transfer member extending from the heating plate to the other side of the reactor housing. Heat generated from the heating plate may be transferred to the other side within the reactor housing through the heat transfer member, thereby uniformly maintaining an internal temperature of the reactor housing.

## Description

### [Technical Field]

### CROSS-REFERENCE TO RELATED APPLICATION

This application claims priority to and the benefit of Korean Patent Application No. 10-2024-0006272 filed with the Korean Intellectual Property Office on January 15, 2024, the entire contents of which are incorporated herein by reference.

The present disclosure relates to an electrically heated fluidized bed reactor, and more particularly, to an electrically heated fluidized bed reactor that may maintain an internal temperature of the reactor at a high and uniform level.

### [Background Art]

A fluidized bed reactor may include a solid catalyst inside, which assists in decomposition of heavy particles into light particles. Usually, when a gaseous reactant is supplied to a lower portion of the fluidized bed reactor, the gaseous reactant may pass through the catalyst and rise, and a reaction may occur during this process. Here, the gaseous reactants may move at a predetermined speed and the solid catalyst may be fluidized to increase a contact area between the catalyst and the reactant, thereby promoting a catalytic reaction.

The fluidized bed reactor may usually have a very large diameter. When using the fluidized bed reactor for an endothermic reaction, it may be difficult to maintain an internal temperature of the fluidized bed reactor at a high temperature by using an external heat source. In addition, due to characteristics of the fluidized bed reactor, heat within the fluidized bed reactor may be effectively distributed. However, a temperature deviation may occur inside the fluidized bed reactor due to a concentration gradient of the reactant or a difference in activity of the catalyst based on a height of the fluidized bed reactor.

Recently, attempts have been made to apply electric heating technology to the fluidized bed reactor. In particular, ongoing research focuses on maintaining the internal temperature of the fluidized bed reactor at a high and uniform level using electric heating technology.

The above information disclosed in this Background section is provided only to assist in a better understanding of the background of the present disclosure, and may therefore include information that is not a part of the prior art already known to those skilled in the art to which the present disclosure pertains.

### [Disclosure]

### [Technical Problem]

The present disclosure attempts to provide an electrically heated fluidized bed reactor that may maintain an internal temperature of the reactor at a high and uniform level by transferring heat, generated using an electric heating method inside the reactor, to the entire reactor through a heat transfer member.

### [Technical Solution]

An electrically heated fluidized bed reactor according to an embodiment of the present disclosure may include: a reactor housing provided with an inlet, through which a reactant is introduced, on a lower surface of the reactor housing and an outlet, though which a reacted product is discharged, on an upper surface of the reactor housing, a catalyst filling an inside of the reactor housing; a heating plate disposed horizontally in an upper portion of the reactor housing, configured to generate heat by receiving a current from a power supply, and including a heating plate through-hole through which an unreacted reactant or the product passes; and a plurality of heat transfer members connected to the heating plate and extending downward from the heating plate to transfer the heat generated by the heating plate to a lower portion inside the reactor housing.

The heating plate through-hole may be sized to allow the unreacted reactant or the product to pass therethrough but the catalyst not to pass therethrough.

The electrically heated fluidized bed reactor may further include an insulator configured to connect the heating plate to the reactor housing such that the reactor housing is insulated from the heating plate.

The electrically heated fluidized bed reactor may further include a distribution plate disposed horizontally in the lower portion of the reactor housing, including a distribution plate through-hole through which the reactant passes, and configured to uniformly distribute the reactant.

The distribution plate through-hole may be sized to allow the reactant to pass therethrough but the catalyst not to pass therethrough.

The current with a predetermined magnitude may be continuously applied to the heating plate to uniformly heat the inside of the reactor housing.

The current with a predetermined magnitude peak may be periodically applied to the heating plate to implement a temperature gradient from an internal temperature of the reactor housing close to the heating plate to an internal temperature of the reactor housing far from the heating plate.

An electrically heated fluidized bed reactor according to another embodiment of the present disclosure may include: a reactor housing provided with an inlet, through which a reactant is introduced, on a lower surface of the reactor housing and an outlet, though which a reacted product is discharged, on an upper surface of the reactor housing, a catalyst filling an inside of the reactor housing; a heating plate disposed horizontally in an upper portion of the reactor housing, configured to generate heat by receiving a current from a power supply, and including a heating plate through-hole through which the reactant passes; and a plurality of heat transfer members connected to the heating plate and extending upward from the heating plate to transfer the heat generated by the heating plate to an upper portion inside the reactor housing.

The heating plate through-hole may be sized to allow the reactant to pass therethrough but the catalyst not to pass therethrough.

The electrically heated fluidized bed reactor may further include an insulator configured to connect the heating plate to the reactor housing such that the reactor housing is insulated from the heating plate.

The electrically heated fluidized bed reactor may further include a cyclone disposed in the upper portion of the reactor housing, connected to the inside of the reactor housing and the outlet, and configured to suction the product, an unreacted reactant, and the catalyst, separate the catalyst from the product and the unreacted reactant to return the catalyst into the reactor, and discharge the catalyst and the product to an outside of the reactor housing through the outlet.

The current with a predetermined magnitude may be continuously applied to the heating plate to uniformly heat the inside of the reactor housing.

The current with a predetermined magnitude peak may be periodically applied to the heating plate to implement a temperature gradient from an internal temperature of the reactor housing close to the heating plate to an internal temperature of the reactor housing far from the heating plate.

### [Advantageous Effects]

According to the present disclosure, the internal temperature of the reactor housing may be uniformly maintained at the high temperature by transferring heat generated from the heating plate mounted on one side of the reactor housing to the other side of the reactor housing by using at least one heat transfer member extending from the heating plate to the other side.

The desired temperature gradient may be generated along the length direction of the reactor housing depending on the current application method.

The required temperature gradient may be generated depending on the type of reaction and the catalyst characteristics, and the heating plate through-hole may function as the baffle to prevent the catalyst particles from being lost to the outside of the reactor.

In addition, any advantage which may be acquired or inferred from an embodiment of the present disclosure is directly or implicitly disclosed in the detailed description of an embodiment of the present disclosure. That is, various advantages inferred from an embodiment of the present disclosure are disclosed in the detailed description described below.

### [Description of the Drawings]

Embodiments in the specification may be better understood by reference to the following description in connection with the accompanying drawings in which like reference numerals refer to identical or functionally similar elements.
FIG. 1 is a schematic diagram of an electrically heated fluidized bed reactor according to an embodiment of the present disclosure.
FIG. 2 is an example of a current application method.
FIG. 3 is another example of a current application method.
FIG. 4 is a schematic diagram of an electrically heated fluidized bed reactor according to another embodiment of the present disclosure.

It should be understood that the drawings referenced above are not necessarily drawn to scale, and present a rather simplified representation of various preferred features illustrating the basic principles of the present device. For example, specific design features of the present device, including a specific dimension, orientation, position and shape, are determined in part by the particular intended application and environment of use.

### [Mode for Invention]

A Term used herein is only to describe a specific embodiment, and is not intended to limit the present device. A term of a single number used herein is intended to include its plural number unless the context clearly indicates otherwise. It should also be understood that the terms "include" and/or "including", when used in the specification, specify the presence of the recited features, integers, steps, operations, elements and/or components, and do not exclude the presence or addition of one or more of other features, integers, steps, operations, elements, elements, components and/or groups thereof. The term "and/or" used herein includes any one or all combinations of the associated listed items.

Further, it should be understood that one or more of methods described below or aspects thereof may be executed by at least one controller. A term "controller" may refer to a hardware device including a memory and a processor. The memory may store program instructions, and the processor may be specifically programmed to execute the program instructions to perform one or more processes described below in more detail. The controller may control operations of units, modules, components, devices, or the like, as described herein. It should also be understood that the methods described below may be executed by an apparatus including the controller in conjunction with one or more other components, as appreciated by those skilled in the art.

In addition, the controller of the present disclosure may be implemented as a non-transitory computer-readable recording medium including executable program instructions executed by the processor. An example of the computer-readable recording medium may include a read only memory (ROM), a random access memory (RAM), a compact disk read only memory (CD-ROM), a magnetic tape, a floppy disk, a flash drive, a smart card, or an optical data storage device, and is not limited thereto. The computer-readable recording medium may also be distributed throughout a computer network, and the program instructions may thus be stored and executed in a distributed manner, for example, on a telematics server or a controller area network (CAN).

According to one aspect of the present disclosure, an electrically heated fluidized bed reactor includes: a reactor housing including an inlet disposed on one side in a first direction to introduce a reactant and an outlet disposed on the other side in the first direction to discharge a reacted product; a distribution plate disposed in one side of the reactor housing in a second direction perpendicular to the first direction and including a plurality of distribution plate through-holes allowing the reactant to pass therethrough; a heating plate disposed on the other side of the reactor housing in the second direction, generating heat by receiving a current from a power supply, and including a plurality of heating plate through-holes allowing the product to pass therethrough; and at least one heat transfer member connected to the heating plate to extend from the heating plate toward one side and transferring heat generated from the heating plate to one side, thereby transferring heat into the reactor housing.

According to another aspect of the present disclosure, an electrically heated fluidized bed reactor includes: a reactor housing having an inlet disposed on one side in a first direction to introduce a reactant and an outlet disposed on the other side in the first direction to discharge a reacted product; a heating plate disposed on one side of the reactor housing in a second direction perpendicular to the first direction, the heating plate generating heat by receiving a current from a power supply and allowing the reactant to pass therethrough; and at least one heat transfer member connected to the heating plate to extend from the heating plate toward the other side and transferring heat generated from the heating plate to the other side, thereby transferring heat into the reactor housing.

According to the present disclosure, heat generated from the heating plate disposed on one side or the other side of the reactor housing may be entirely transferred into the reactor housing through at least one heat transfer member, thereby maintaining an internal temperature of the reactor housing at a high and uniform level.

Hereinafter, an embodiment of the present disclosure is described in detail with reference to the accompanying drawings.

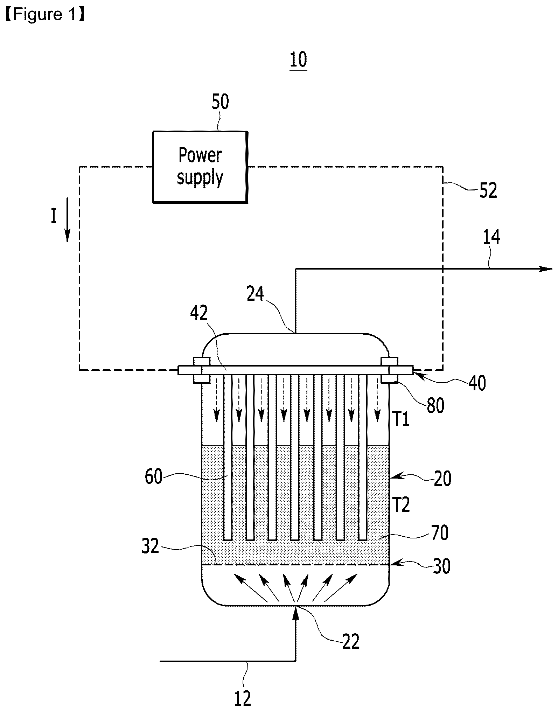

FIG. 1 is a schematic diagram of an electrically heated fluidized bed reactor according to an embodiment of the present disclosure.

As shown in FIG. 1, an electrically heated fluidized bed reactor 10 according to an embodiment of the present disclosure may include a reactor housing 20. The reactor housing 20 may generally be formed in a hollow cylindrical shape. However, a shape of the reactor housing 20 is not limited to the hollow cylindrical shape. The inside of the reactor housing 20 may be filled with a solid catalyst 70 promoting a reaction (e.g., thermal decomposition) of a gaseous reactant. The catalyst 70 may be fluidized by the gaseous reactant.

The reactor housing 20 may include a lower surface, an upper surface, and a side surface connecting the lower surface to the upper surface. An inlet 22 may be disposed on the lower surface of the reactor housing 20, and the inlet 22 may be connected to an inlet line 12 to allow the gaseous reactant to be supplied into the reactor housing 20 through the inlet line 12 and the inlet 22 at a predetermined speed. The gaseous reactant may move upward within the reactor housing 20 to fluidize the catalyst 70, and react with the catalyst 70 to convert the reactant into the product. An outlet 24 may be disposed above the reactor housing 20, and the outlet 24 may be connected to an outlet line 14 to allow the product, which reacts by coming into contact with the catalyst 70 within the reactor housing 20, to be discharged to the outlet line 14 through the outlet 24.

In order for the reactant to react with the catalyst 70, the internal temperature of the reactor housing 20 is required to be raised to a set reaction temperature (e.g., 600°C to 700°C) or higher. In order to raise the internal temperature of the reactor housing 20, the electrically heated fluidized bed reactor 10 may further include a heating plate 40 and a heat transfer member 60.

The heating plate 40 may be disposed in the upper portion of the reactor housing 20 and extend in a horizontal direction perpendicular to a vertical direction. The heating plate 40 may receive a current I from a power supply 50 by being electrically connected to the power supply 50. The heating plate 40 may be made of an alloy material (e.g., nickel-chromium (Ni-Cr), iron-chromium (Fe-Cr), iron-nickel-chromium (Fe-Ni-Cr), or iron-chromium-aluminum (Fe-Cr-Al)) having a high resistivity to generate heat by using the current I applied from the power supply 50. The heating plate 40 may include at least one heating plate through-hole 42, and the reacted product or an unreacted reactant may move upward from the heating plate 40 through the heating plate through-hole 42 and be discharged to the outlet line 14 through the outlet 24. However, the heating plate through-hole 42 may be sized to prevent the solid catalyst 70 from passing through the heating plate through-hole 42, thereby preventing the catalyst 70 fluidized by the reactant or the product from entering the outlet 24 through the heating plate through-hole 42. The heating plate 40 may be connected to the reactor housing 20 by using an insulator 80 to prevent the current I applied to the heating plate 40 from flowing into the reactor housing 20.

The heat transfer member 60 may have a rod shape and include an upper end and a lower end. The heat transfer member 60 may have the upper end connected to the heating plate 40 and the lower end extending downward from the heating plate 40. The heat transfer member 60 may transfer heat generated from the heating plate 40 to a lower portion of the reactor housing 20 to maintain the uniform internal temperature of the reactor housing 20 and reduce a temperature deviation depending on a position within the reactor housing 20. To this end, the heat transfer member 60 may be made of a material having high thermal conductivity, and the plurality of heat transfer members 60 may be disposed to be parallel to each other at equal intervals. However, the number and arrangement of the heat transfer members 40 are not limited to the number and arrangement exemplified herein, and may have any number and arrangement capable of uniformly transferring heat generated from the heating plate 40 into the reactor housing 20.

The electrically heated fluidized bed reactor 10 may further include a distribution plate 30. The distribution plate 30 may be disposed to be close to the inlet 22 inside the reactor housing 20, i.e., in the lower portion of the reactor housing 20, and extend in the horizontal direction. The distribution plate 30 may include at least one distribution plate through-hole 32, and the reactant introduced into the reactor housing 20 through the inlet 22 may move upward from the distribution plate 30 through the distribution plate through-hole 32. In this process, the reactant introduced into the reactor housing 20 may be distributed in the horizontal direction and move in the vertical direction. Therefore, a contact area between the reactant and the catalyst 70 may increase, thereby improving reaction efficiency. Meanwhile, the distribution plate through-hole 32 may be sized to prevent the solid catalyst 70 from passing through the distribution plate through-hole 32, thereby preventing the catalyst 70 from entering the inlet 22 through the distribution plate through-hole 32.

The electrically heated fluidized bed reactor 10 may further include the power supply 50. The power supply 50 may apply the current I to the heating plate 40 by being electrically connected to the heating plate 40 via a wire 52. The power supply 50 may be an alternating-current (AC) power supply or a direct-current (DC) power supply.

Meanwhile, the internal temperature of the reactor housing 20 may be adjusted based on a target reaction, and the internal temperature of the reactor housing 20 may be adjusted by adjusting a method for applying the current I from the power supply 50 to the heating plate 40.

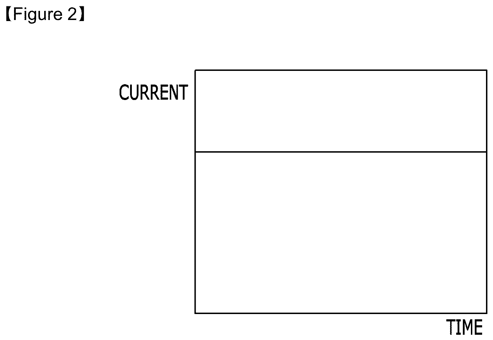

In an example, as shown in FIG. 2, the internal temperature of the reactor housing 20 may be maintained to be uniform regardless of the position if the current I of a predetermined magnitude is continuously applied to the heating plate 40. That is, an internal temperature T1 of a portion of the reactor housing 20 that is close to the heating plate 40 and an internal temperature T2 of a portion of the reactor housing 20 that is far from the heating plate 40 may be the same as each other. A current application method shown in FIG. 2 may be advantageous for the reaction where the internal temperature of the reactor housing 20 is required to be maintained at a uniform level, such as an endothermic reaction.

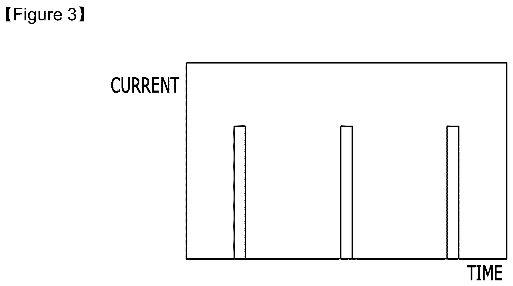

In another example, as shown in FIG. 3, the internal temperature of the reactor housing 20 may be gradually reduced based on its distance from the heating plate 40 if a peak current I of a predetermined magnitude is periodically applied to the heating plate 40. That is, a temperature gradient may be implemented from the internal temperature T1 of the portion of the reactor housing 20 that is close to the heating plate 40 to the internal temperature T2 of the portion of the reactor housing 20 that is far from the heating plate 40, and the internal temperature T1 of the portion of the reactor housing 20 that is close to the heating plate 40 may be higher than the internal temperature T2 of the portion of the reactor housing 20 that is far from the heating plate 40. A current application method shown in FIG. 3 may be advantageous in a case where both the preheating and main reaction of the reactant occur within the reactor housing 20.

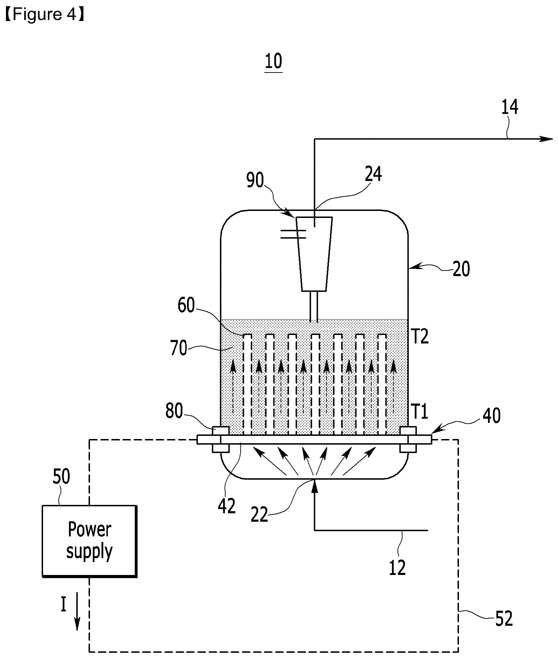

FIG. 4 is a schematic diagram of an electrically heated fluidized bed reactor according to another embodiment of the present disclosure.

As shown in FIG. 4, the electrically heated fluidized bed reactor 10 according to another embodiment of the present disclosure may include the reactor housing 20, the heating plate 40, the heat transfer member 60, a cyclone 90, and the power supply 50.

The reactor housing 20 may generally be formed in the hollow cylindrical shape, the inlet 22 may be disposed on the lower surface of the reactor housing 20, the inlet 22 may be connected to the inlet line 12 to allow the gaseous reactant to be supplied into the reactor housing 20 through the inlet line 12 and the inlet 22 at the predetermined speed. The outlet 24 may be disposed on the upper surface of the reactor housing 20, the cyclone 90 may be disposed in an upper portion of the reactor housing 20, and the outlet line 14 may be connected to the cyclone 90 through the outlet 24. The cyclone 90 may suction the product, the unreacted reactant, and the catalyst 70 from the upper portion of the reactor housing 20 to separate the catalyst 70 from the product and the unreacted reactant by using a centrifugal force, thereby discharging the product and the unreacted reactant to the outside of the reactor housing 20 through the outlet line 14 and returning the separated catalyst 70 into the reactor housing 20. In the embodiment of the present disclosure, the plurality of heating plate through-holes 42 disposed in the heating plate 40 may perform the same function as the cyclone 90 in the another embodiment of the present disclosure by allowing only the product and the unreacted reactant to pass therethrough.

The heating plate 40 may be disposed in the lower portion of the reactor housing 20 and extend in the horizontal direction. The heating plate 40 may receive the current I from the power supply 50 by being electrically connected to the power supply 50. The heating plate 40 may be made of the alloy material (e.g., nickel-chromium (Ni-Cr), iron-chromium (Fe-Cr), iron-nickel-chromium (Fe-Ni-Cr), or iron-chromium-aluminum (Fe-Cr-Al)) having the high resistivity to generate heat by using the current I applied from the power supply 50. The heating plate 40 may include at least one heating plate through-hole 42, and the reactant introduced into the reactor housing 20 through the inlet 22 may move upward from the heating plate 40 through the heating plate through-hole 42. Therefore, the heating plate 40 including the heating plate through-hole 42 disposed therein may also perform the same function as the distribution plate 30 according to the embodiment of the present disclosure. In addition, the heating plate through-hole 42 may be sized to prevent the solid catalyst 70 from passing through the heating plate through-hole 42, thereby preventing the catalyst 70 from entering the inlet 22 through the heating plate through-hole 42. The heating plate 40 may be connected to the reactor housing 20 by using the insulator 80.

The heat transfer member 60 may have the rod shape and include the upper end and the lower end. The heat transfer member 60 may have the lower end connected to the heating plate 40 and the upper end extending upward from the heating plate 40. The heat transfer member 60 may transfer heat generated from the heating plate 40 to the upper portion of the reactor housing 20 to maintain the uniform internal temperature of the reactor housing 20 and reduce the temperature deviation depending on the position within the reactor housing 20. To this end, the heat transfer member 60 may be made of the material having high thermal conductivity, and the plurality of heat transfer members 60 may be disposed to be parallel to each other at the equal intervals.

The power supply 50 may apply the current I to the heating plate 40 by being electrically connected to the heating plate 40 via the wire 52. The power supply 50 may be an alternating-current (AC) power supply or a direct-current (DC) power supply. Also in another embodiment of the present disclosure, the internal temperature of the reactor housing 20 may be adjusted by adjusting the method for applying the current I from the power supply 50 to the heating plate 40.

In an example, as shown in FIG. 2, the internal temperature of the reactor housing 20 may be maintained to be uniform regardless of the position by continuously applying the current I of a predetermined magnitude to the heating plate 40.

In another example, as shown in FIG. 3, the internal temperature of the reactor housing 20 may be gradually reduced based on its distance from the heating plate 40 by periodically applying the peak current I of a predetermined magnitude to the heating plate 40. The current application method shown in FIG. 3 may be advantageous in a case where the temperature of the reactant may rise to an activation temperature range or above as an exothermic reaction progresses.

Although the embodiments of the present disclosure have been described hereinabove, the scope of the present disclosure is not limited thereto, and all equivalent modifications easily modified by those skilled in the art to which the present disclosure pertains are intended to fall within the scope and spirit of the present disclosure.

## Claims

1. An electrically heated fluidized bed reactor comprising:
a reactor housing provided with an inlet, through which a reactant is introduced, on a lower surface of the reactor housing and an outlet, though which a reacted product is discharged, on an upper surface of the reactor housing, a catalyst filling an inside of the reactor housing;
a heating plate disposed horizontally in an upper portion of the reactor housing, configured to generate heat by receiving a current from a power supply, and including a heating plate through-hole through which an unreacted reactant or the product passes; and
a plurality of heat transfer members connected to the heating plate and extending downward from the heating plate to transfer the heat generated by the heating plate to a lower portion inside the reactor housing.

2. The electrically heated fluidized bed reactor of claim 1, wherein
the heating plate through-hole is sized to allow the unreacted reactant or the product to pass therethrough but the catalyst not to pass therethrough.

3. The electrically heated fluidized bed reactor of claim 1, further comprising
an insulator configured to connect the heating plate to the reactor housing such that the reactor housing is insulated from the heating plate.

4. The electrically heated fluidized bed reactor of claim 1, further comprising
a distribution plate disposed horizontally in the lower portion of the reactor housing, including a distribution plate through-hole through which the reactant passes, and configured to uniformly distribute the reactant.

5. The electrically heated fluidized bed reactor of claim 4, wherein
the distribution plate through-hole is sized to allow the reactant to pass therethrough but the catalyst not to pass therethrough.

6. The electrically heated fluidized bed reactor of claim 1, wherein
the current with a predetermined magnitude is continuously applied to the heating plate to uniformly heat the inside of the reactor housing.

7. The electrically heated fluidized bed reactor of claim 1, wherein
the current with a predetermined magnitude peak is periodically applied to the heating plate to implement a temperature gradient from an internal temperature of the reactor housing close to the heating plate to an internal temperature of the reactor housing far from the heating plate.

8. An electrically heated fluidized bed reactor comprising:
a reactor housing provided with an inlet, through which a reactant is introduced, on a lower surface of the reactor housing and an outlet, though which a reacted product is discharged, on an upper surface of the reactor housing, a catalyst filling an inside of the reactor housing;
a heating plate disposed horizontally in a lower portion of the reactor housing, configured to generate heat by receiving a current from a power supply, and including a heating plate through-hole through which the reactant passes; and
a plurality of heat transfer members connected to the heating plate and extending upward from the heating plate to transfer the heat generated by the heating plate to an upper portion inside the reactor housing.

9. The electrically heated fluidized bed reactor of claim 8, wherein
the heating plate through-hole is sized to allow the reactant to pass therethrough but the catalyst not to pass therethrough.

10. The electrically heated fluidized bed reactor of claim 8, further comprising
an insulator configured to connect the heating plate to the reactor housing such that the reactor housing is insulated from the heating plate.

11. The electrically heated fluidized bed reactor of claim 8, further comprising
a cyclone disposed in the upper portion of the reactor housing, connected to the inside of the reactor housing and the outlet, and configured to suction the product, an unreacted reactant, and the catalyst, separate the catalyst from the product and the unreacted reactant to return the catalyst into the reactor, and discharge the catalyst and the product to an outside of the reactor housing through the outlet.

12. The electrically heated fluidized bed reactor of claim 8, wherein
the current with a predetermined magnitude is continuously applied to the heating plate to uniformly heat the inside of the reactor housing.

13. The electrically heated fluidized bed reactor of claim 8, wherein
the current with a predetermined magnitude peak is periodically applied to the heating plate to implement a temperature gradient from an internal temperature of the reactor housing close to the heating plate to an internal temperature of the reactor housing far from the heating plate.
